# EUROPÄISCHE PATENTANMELDUNG

(11) **EP 4 447 177 A1**
(43) Veröffentlichungstag der Anmeldung: **16.10.2024**
(21) Anmeldenummer: 24162274.5
(22) Anmeldetag: 08.03.2024
(51) Int. Cl.: H01M 10/0525, H01M 10/0565, H01M 10/0566, H01M 10/058, H01M 10/42, H01M 50/186, H01M 50/417, H01M 50/46, H01M 50/494

(54) **LITHIUM-IONEN-BATTERIEZELLE**

(30) Priorität: 13.04.2023 DE 102023203368
(71) Anmelder: VOLKSWAGEN AG, 38440 Wolfsburg (DE)
(72) Erfinder: Koch, Stephan Leonhard, 38154 Königslutter (DE)

(57) **Zusammenfassung**

Die Erfindung betrifft eine Lithium-Ionen-Batteriezelle (2). Diese umfasst eine Anode (6) und eine Kathode (8), sowie einen zwischen der Anode (6) und der Kathode (8) angeordneten Feststoff-Elektrolyt (18), wobei die Anode (6) und/oder die Kathode (8) mit einem Flüssig-Elektrolyt (22) getränkt ist, und wobei zwischen der mit dem Flüssig-Elektrolyt (22) getränkten Anode (6) und dem Feststoff-Elektrolyt (18) und/oder zwischen der mit dem Flüssig-Elektrolyt (22) getränkten Kathode (8) und dem Feststoff-Elektrolyt (18) jeweils ein Separator (20) angeordnet ist.

## Beschreibung

Die Erfindung betrifft eine Lithium-Ionen-Batteriezelle mit einer Anode, mit einer Kathode sowie mit einem Feststoff-Separator.

Eine Lithium-lonen-Batteriezelle weist eine Anode und eine Kathode auf. Bei einer herkömmlichen Lithium-Ionen-Batteriezelle ist weiterhin zwischen der Anode und der Kathode ein Separator angeordnet. Hierbei ist in der Batteriezelle ein flüssiger Elektrolyt (FlüssigElektrolyt) für den Ladungstransport zwischen der Anode und der Kathode aufgenommen, wobei die Anode, die Kathode sowie der Separator mit dem Elektrolyt getränkt sind.

Alternativ zu einer solch herkömmlichen Lithium-Ionen-Batteriezelle sind auch als Festkörperbatteriezellen bezeichnete Feststoffbatteriezellen bekannt. Eine solche Batteriezelle umfasst einen bei Betriebstemperatur festen Elektrolyt (Feststoff-Elektrolyt), der zwischen der Anode und der Kathode angeordnet ist. Dabei erfüllt der Feststoff-Elektrolyt ebenfalls die Funktion des Separators.

In Batteriezellen mit einem Feststoff-Elektrolyt besteht aufgrund der vergleichsweise rauen Oberfläche des Feststoff-Elektrolyt und/oder der jeweiligen Elektrode, insbesondere der Kathode, die Gefahr deren Beschädigung im Zuge der Zellmontage und bei einer relativen Verschiebung gegeneinander im Betrieb der Batteriezelle. Weiterhin kann eine unterschiedliche Tortuosität des Feststoff-Elektrolyt und der Elektrode nachteilig zu lokalen Schwankungen der Leitfähigkeit und in Folge dessen zu höherem Zellinnenwiderstand und/oder geringerer Lebensdauer führen.

Aus der US 2009/0155677 A1 ist eine nichtwässrige wiederaufladbare Lithiumbatterie bekannt, die einen Separator umfasst. Dieser weist einen Separatorkörper und einen Verbundstoff auf, der eine organische Verbindung und eine anorganische Verbindung enthält. Des Weiteren umfasst die Lithiumbatterie einen Elektrolyt, welcher beispielsweise ein nichtwässriger Elektrolyt, in dem Lithiumsalz in einem organischen Lösungsmittel gelöst ist, ein Polymerelektrolyt, ein anorganischer fester-Elektrolyt, ein Polymerelektrolyt oder ein Verbundmaterial mit einem anorganischen festen Elektrolyten ist.

Der Erfindung liegt die Aufgabe eine besonders geeignete Lithium-Ionen-Batteriezelle anzugeben. Bei dieser soll insbesondere eine möglichst gute mechanische und/oder elektrische Kopplung zwischen dem Feststoff-Elektrolyt und der Beschichtung einer deren Elektroden realisiert sein. Weiterhin soll eine Traktionsbatterie mit einer solchen Lithium-Ionen-Batteriezelle und ein elektrisch angetriebenes Kraftfahrzeug mit der Traktionsbatterie angegeben werden.

Diese Aufgabe wird hinsichtlich der Lithium-Ionen-Batteriezelle durch die Merkmale des Anspruchs 1 erfindungsgemäß gelöst. Bezüglich der Traktionsbatterie wird die Aufgabe mit den Merkmalen des Anspruchs 8 und bezüglich der elektrisch angetriebenen Kraftfahrzeugs mit den Merkmalen des Anspruchs 9 erfindungsgemäß gelöst. Vorteilhafte Ausgestaltungen und Weiterbildungen sind Gegenstand der Unteransprüche. Dabei gelten die Ausführungen im Zusammenhang mit der Lithium-lonen-Batteriezelle sinngemäß auch für die Traktionsbatterie sowie für das Kraftfahrzeug und umgekehrt.

Die im Folgenden kurz auch als Batteriezelle oder als Zelle bezeichnete Lithium-Ionen-Batteriezelle umfasst eine Anode sowie eine Kathode.

Die Kathode weist zweckmäßigerweise einen Stromableiter auf, auf welchem eine Beschichtung mit Aktivmaterial aufgebracht ist. Beispielsweise ist der Stromableiter eine Metallfolie, insbesondere eine Aluminiumfolie. Als Aktivmaterial für die Kathode wird beispielsweise ein Lithium-Nickel-Cobalt-Aluminium-Oxid (NCA), ein Lithium-Eisen-Phosphat (LFP), ein Lithium-Nickel-Mangan-Cobalt-Oxid (NMC), Lithium-Titanat (LTO), Lithiummanganoxid (LMO), Lithium-Mangan-Nickeloxid (LMNO), Lithium-Cobalt-Oxid (LCO), LiFeSO₄F, oder LiTiS₂ verwendet. Zweckmäßig umfasst die Beschichtung der Kathode zusätzlich zum Aktivmaterial einen Binder sowie ein Leitmittel, wie beispielsweise Graphit oder Leitruß.

Beispielsweise weist die Anode einen, insbesondere als Kupferfolie ausgebildeten, Stromableiter auf, wobei der Stromableiter beschichtet ist. Beispielsweise umfasst diese Beschichtung der Anode ein Aktivmaterial wie beispielsweise Graphit, Graphen, sogenannte Hard- oder Soft- Carbon-Nanotubes. Weiterhin umfasst die Beschichtung zweckmäßig einen Binder sowie ein Leitmittel, wie beispielsweise Graphit oder Leitruß. Alternativ hierzu weist der Stromableiter eine Beschichtung aus Silizium oder aus, insbesondere metallischem, Lithium auf. Der Stromableiter der Anode ist vorzugsweise eine Kupferfolie. Alternativ ist die Anode aus Lithium gebildet.

Insbesondere sind für das Aktivmaterial für die Anode bzw. für die Kathode aus dem Stand der Technik bekannte Aktivmaterialien für eine Anode bzw. für eine Kathode einer Lithium-Ionen-Batteriezelle mit lediglich flüssigem Elektrolyt geeignet.

Die Lithium-lonen-Batteriezelle umfasst weiterhin einen Feststoff-Elektrolyt (Festelektrolyt), also einen festen Elektrolyt, welcher zwischen der Anode und der Kathode angeordnet ist. Der Feststoff-Elektrolyt ist beispielsweise ein anorganischer Feststoff-Elektrolyt, insbesondere ein sulfidischer oder ein oxidischer Feststoff-Elektrolyt. Weiter beispielsweise ist der FeststoffElektrolyt ein fester Polymerelektrolyt oder ein sogenannter Quasi-Festelektrolyt, insbesondere ein Gel-Polymer-Elektrolyt.

Beispielsweise können in der Batteriezelle auch mehrere solcher Feststoff-Elektrolyte verwendet werden. So kann eine der Elektroden mit dem Gel-Polymer-Elektrolyt versehen, insbesondere getränkt sein, wobei ein weiterer Festelektrolyt, beispielsweise ein fester Polymerelektrolyt, zwischen den Elektroden angeordnet sein.

Die Anode und/oder die Kathode ist mit einem Flüssig-Elektrolyt (Flüssigelektrolyt), also mit einem flüssigen Elektrolyt, getränkt. Insbesondere umfasst der Flüssig-Elektrolyt ein nichtwässriges Lösungsmittel, wie beispielsweise Ethylencarbonat oder Propylencarbonat, und ein darin gelöstes Leitsalz, wie beispielswiese Lithiumhexafluorophosphat.

Im Vergleich zu Feststoff-Batteriezellen, bei welchen der Feststoff-Elektrolyt in der Anode und/oder in die Kathode, insbesondere in den Beschichtungen deren Substrate, beispielsweise durch Schmelzinfiltration, aufgenommen sein kann, ist zweckmäßig die mit dem FlüssigElektrolyt getränkte Kathode bzw. die mit dem Flüssig-Elektrolyt getränkte Anode, insbesondere deren jeweilige Beschichtung, nicht mit dem Feststoff-Elektrolyt versehen. Mit anderen Worten ist zweckmäßig die mit Flüssig-Elektrolyt getränkte Kathode und/oder Anode frei von FeststoffElektrolyt. Ist eine der Elektroden nicht mit dem Flüssig-Elektrolyt getränkt, so ist diese Elektrode beispielsweise mit dem Feststoff-Elektrolyt versehen.

Die Lithium-lonen-Batteriezelle umfasst also sowohl einen Feststoff-Elektrolyt als auch einen Flüssig-Elektrolyt. Die Lithium-lonen-Batteriezelle wird aufgrund dessen auch als Hybridelektrolyt-Zelle bezeichnet. Zweckmäßig sind der Feststoff-Elektrolyt und der FlüssigElektrolyt aufeinander abgestimmt. Insbesondere soll eine Reaktion eines Bestandteils des Flüssig-Elektrolyt mit dem Feststoff-Elektrolyt vermieden sein. Mit anderen Worten ist der Feststoff-Elektrolyt mit dem Flüssig-Elektrolyt kompatibel gewählt.

Weiterhin ist zwischen der mit dem Flüssig-Elektrolyt getränkten Anode und dem FeststoffElektrolyt und/oder zwischen der mit dem Flüssig-Elektrolyt getränkten Kathode und dem Feststoff-Elektrolyt ein jeweiliger Separator angeordnet. Bevorzugt ist der Separator ein zum Feststoff-Elektrolyt und/oder zu den Elektroden separates Bauteil. Beispielsweise ist zwischen der mit dem Flüssig-Elektrolyt getränkten Anode und dem Feststoff-Elektrolyt und/oder zwischen der mit dem Flüssig-Elektrolyt getränkten Kathode und dem Feststoff-Elektrolyt jeweils mehr als ein Separator angeordnet, also ist zwischen der mit dem Flüssig-Elektrolyt getränkten Anode und dem Feststoff-Elektrolyt und/oder zwischen der mit dem FlüssigElektrolyt getränkten Kathode und dem Feststoff-Elektrolyt jeweils mindestens ein Separator angeordnet.

Insbesondere liegt der Separator an dem Feststoff-Elektrolyt sowie an der entsprechenden Elektrode an. Insbesondere ist also der jeweilige Separator mit dem Feststoff-Elektrolyt und mit der Anode bzw. mit der Kathode (mechanisch) in Kontakt.

Geeigneter Weise ist eine Schichtstruktur aus der Anode, der Kathode, dem Feststoff-Elektrolyt, und dem Separator bzw. den Separatoren gebildet. Zweckmäßig sind diese dabei übereinandergestapelt angeordnet.

Der Separator erfüllt den Zweck, die Rauigkeit des Festelektrolyt und/oder der diesem zugewandten Oberfläche der Elektrode zu kompensieren. So ist aufgrund der vergleichsweise hohen Elastizität des Separators eine vergleichsweise leicht verformbare Zwischenschicht und/oder eine Pufferschicht zwischen der jeweiligen Elektrode und dem Feststoff-Elektrolyt gebildet. Besonders vorteilhaft ist damit einhergehend eine Beschädigung des FeststoffElektrolyt und/oder der jeweiligen Elektrode im Zuge der Montage der Zelle und bei einem Verschieben des Elektrolyt relativ zur Elektrode im Betrieb der Zelle vermieden oder eine Gefahr dessen zumindest reduziert.

Gemäß einer geeigneten Ausgestaltung weist der Separator eine Dicke, mit anderen Worten eine räumliche Ausdehnung in einer Richtung von der Anode zur Kathode, auf, die kleiner als oder gleich 10 µm ist. Vorzugsweise ist die Dicke dabei größer als 2 µm. Insbesondere beträgt die Dicke zwischen 2 µm und 6 µm, insbesondere zwischen 3 µm und 5 µm. Die räumliche und elektrische Trennung der Anode und der Kathode ist bereits anhand des Feststoff-Elektrolyt realisiert. Folglich kann der Separator im Vergleich zu gleichartigen Separatoren in einer Batteriezelle, die lediglich einen Flüssig-Elektrolyt aufweist, dünner gewählt werden. Jedoch sollte eine Mindestdicke, je nach Ausgestaltung beispielsweise eine Dicke von wenigstens 2 µm, nicht unterschritten werden, um eine ausreichende Pufferwirkung zu realisieren.

Beispielsweise beträgt eine Porosität des Separators mindestens 10%, insbesondere mindestens 25%, bevorzugt mindestens 40% und/oder maximal 90%, insbesondere maximal 80%. Auf diese Weise ist auch bei Betrieb der Batteriezelle, bei welchem Druck auf den Separator ausgeübt wird, die ionische Leitfähigkeit nicht oder lediglich vergleichsweise wenig behindert.

Für eine besonders geeignete Pufferwirkung ist der Separator weicher, insbesondere flexibler und/oder leichter verformbar, als der Feststoff-Elektrolyt und/oder als die Elektrode. Folglich ist bei der Montage und/oder im Betrieb die Gefahr einer Beschädigung des Feststoff-Elektrolyt bzw. der Elektrode reduziert.

Bei herkömmlichen Batteriezellen, welche lediglich einen Flüssig-Elektrolyt aufweisen, kann der Separator mit einer Beschichtung, beispielsweise einer mit einer Beschichtung aus einer Keramik versehen sein. Diese Beschichtung dient beispielsweise dazu, ein Durchdringen eines Lithium-Dendrits oder eines scharfkantigen Grat der Beschichtung einer der Elektroden durch den Separator und damit einhergehend einen Kurzschluss innerhalb der Batteriezelle zu vermieden. Zweckmäßig ist der Separator der erfindungsgemäßen Lithium-Ionen-Batteriezelle (Batteriezelle) dagegen unbeschichtet. Vorteilhaft ist dessen Härte aufgrund der fehlenden Beschichtung nicht erhöht und damit einhergehend die Pufferwirkung des Separators vergleichsweise hoch, wobei ein Kurzschluss aufgrund von Dendriten bereits aufgrund des Feststoff-Elektrolyt vermieden oder eine Gefahr dessen zumindest reduziert ist.

Im Vergleich zu Separatoren, die in herkömmlichen Batteriezellen, die lediglich flüssigen Elektrolyt aufweisen, kann der Separator der erfindungsgemäßen Batteriezelle auch ein Material aufweisen oder aus diesem gebildet sein, welches bei starker Erhitzung schrumpft. Bei herkömmlichen Batteriezellen ist dies zu vermeiden, um ein thermisches Durchgehen zu verhindern. Diese Funktion wird bei der erfindungsgemäßen Batteriezelle bereits durch den Feststoff-Elektrolyt erfüllt.

Gemäß einer geeigneten Ausgestaltung ist der Separator ein, zweckmäßiger Weise poröser, Kunststoff-Separator. Beispielsweise ist der Separator ein poröser Polyolefin-Separator, zweckmäßig eine Polyolefin-Folie wie beispielsweise eine Polyethylen-Folie oder eine Polypropylen-Folie. Derartige Folien werden insbesondere als Separatoren für herkömmliche Lithium-Ionen-Batteriezellen verwendet, die lediglich einen Flüssig-Elektrolyt aufweisen. Derartige Separatoren sind kostensparend und einfach herzustellen.

Alternativ hierzu ist der Separator ein, insbesondere fester, Schaum. Beispielsweise wird dieser im Zuge der Herstellung direkt auf den Feststoff-Elektrolyt und/oder auf die Elektrode, insbesondere auf deren Beschichtung, aufgeschäumt.

Zweckmäßig ist der Separator für den flüssigen Elektrolyt und/oder für Lithium-Ionen durchlässig, also permeabel.

Gemäß einer besonders bevorzugten Ausgestaltung ist der Separator mit dem oder mit einem Flüssig-Elektrolyt getränkt. Die Tränkung des Separators hat zum einen den Vorteil, dass ein Reservoir an Flüssig-Elektrolyt in der Zelle vorhanden ist. Infolge dessen ist ein Austrocknen der Zelle bei einer Alterung der Zelle vermieden oder zumindest eine Gefahr dessen reduziert. Zum anderen ist auf diese Weise dem Effekt wirksam vorgebeugt, dass einzelne präferierte Lithium-Ionenleitpfade im Separator sowie in der Beschichtung der an diesem anliegenden Elektrode dazu führen, dass die Batteriezelle lokal (kinetisch) elektrochemisch aktiver ist und somit die Batteriezelle schneller altert. Die Pufferschicht erhöht zwar geringfügig den Innenwiderstand der Zelle aufgrund des vergleichsweise langen lonenleitpfads. Jedoch werden lokale Schwankungen in der elektrochemischen Aktivität ausgeglichen. Treten beispielsweise an einem Porenkanal der Beschichtung der Elektrode vergleichsweise viele Lithium-Ionen aus, können sie sich in der Pufferschicht lateral, insbesondere zumindest anteilig in einer Richtung senkrecht zur Richtung von der Anode zur Kathode, verteilen, bevor sie in den Feststoffelektrolyten eintreten. Lokale Übersättigung bzw. Entleerung wird damit deutlich unwahrscheinlicher und/oder reduziert.

Beispielsweise wird der Separator für die Bereitstellung des Reservoirs an Flüssig-Elektrolyt im Zuge der Herstellung bereits getränkt in die Batteriezelle eingebracht. Alternativ und bevorzugt wird der Separator zusammen mit der jeweiligen Elektrode mit dem Flüssig-Elektrolyt getränkt.

Gemäß einer bevorzugten Ausgestaltung ist die Anode, insbesondere deren Beschichtung mit Aktivmaterial, und/oder die Kathode, insbesondere deren Beschichtung mit Aktivmaterial, beispielsweise zusammen mit dem mit Flüssig-Elektrolyt getränkten Separator, dicht bezüglich des Flüssig-Elektrolyt umfasst. Insbesondere ist eine hierzu verwendete Dichtung nicht ionenleitfähig, lässt also geladene Ionen nicht passieren, und/oder ist fluiddicht. Vorzugsweise ist die Dichtung zumindest geringfügig flexibel, so dass diese auch bei einer Volumenänderung der Beschichtung aufgrund der Einlagerung bzw. aufgrund des Austretens von Lithium-Ionen aus dieser Beschichtung dicht bleibt.

Beispielsweise ist die Dichtung elektrisch isolierend. Alternativ ist die Dichtung elektrisch leitfähig.

Beispielsweise umschließt die Dichtung die jeweilige Elektrode bzw. deren Beschichtung. Alternativ ist die Dichtung rahmenartig ausgebildet. Hierbei umschließt die Dichtung den zwischen dem Feststoff-Elektrolyt und dem Stromableiter der jeweiligen Elektrode gebildeten Raum für die Beschichtung dieser Elektrode dicht. Weiter alternativ ist der Feststoff-Elektrolyt dicht mit einem Gehäuse der Batteriezelle oder mit einer taschenförmigen Isolatorfolie, in welcher die Elektroden, der Separator sowie die Elektrolyte aufgenommen sind, gefügt.

Auf diese Weise ist ein direkter lonenaustausch zwischen der mit dem Flüssig-Elektrolyt getränkten Anode oder Kathode mit der jeweils anderen, gegebenenfalls ebenfalls mit FlüssigElektrolyt getränkten, Elektrode vermieden. Vielmehr erfolgt die lonenleitung zwischen der Anode und der Kathode mittels des Feststoff-Elektrolyt.

Ein weiterer Aspekt der Erfindung betrifft eine Traktionsbatterie für ein elektrisch angetriebenes Kraftfahrzeug, wobei die Traktionsbatterie eine Lithium-Ionen-Batteriezelle in einer der oben dargestellten Varianten aufweist. Vorzugsweise umfasst die Traktionsbatterie eine Vielzahl solcher Lithium-Ionen-Batteriezellen, die in Serie und/oder parallel zueinander geschaltet sind.

Ein weiterer Aspekt der Erfindung betrifft ein elektrisch angetriebenes Kraftfahrzeug. Dieses weist eine Traktionsbatterie in einer der oben dargestellten Varianten auf. Die Traktionsbatterie stellt dabei insbesondere elektrische Energie für einen Elektromotor eines Traktionsantriebs des Kraftfahrzeug bereit.

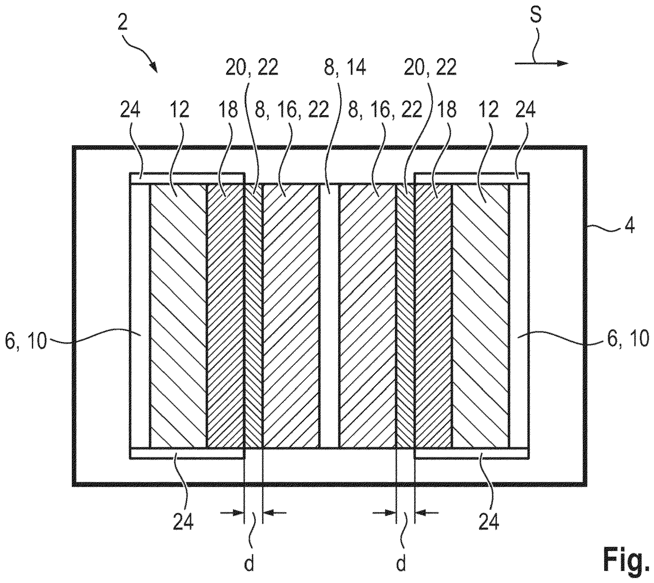

Nachfolgend wird ein Ausführungsbeispiel der Erfindung anhand einer Zeichnung näher erläutert. Darin zeigt die einzige Figur eine Lithium-Ionen-Batteriezelle, in welcher sowohl ein FeststoffElektrolyt als auch ein Flüssig-Elektrolyt verwendet wird.

In der Figur ist eine Lithium-Ionen-Batteriezelle 2 dargestellt.

Die im Folgenden kurz als Batteriezelle 2 bezeichnete Lithium-Ionen-Batteriezelle 2 weist ein Gehäuse 4 auf, in welchem hier beispielsweise zwei Anode 6 und eine Kathode 8 als Elektroden aufgenommen sind.

Jede der Anoden 6 umfasst hierbei ein beispielsweise als Kupferfolie ausgebildetes (Anoden-) Substrat 10, auf welchem eine Beschichtung 12 aufgebracht ist. Beispielsweise weist die (Anoden-) Beschichtung 12 dabei ein Anoden-Aktivmaterial , wie beispielsweise Graphit, Graphen, oder sogenannte Hard- oder Soft- Carbon-Nanotubes, sowie einen Binder und ein Leitmittel auf. Gemäß einer nicht weiter dargestellten Alternative der Batteriezelle 2 besteht die Beschichtung 12 aus, insbesondere metallischem, Lithium.

Die Kathode 8 umfasst ein beispielsweise als Aluminiumfolie ausgebildetes (Kathoden-) Substrat 14, welches beidseitig mit einer Beschichtung 16 versehen ist. Diese (Kathoden-) Beschichtung 16 weist zweckmäßig ein Aktivmaterial, wie beispielsweise Lithium-Nickel-Cobalt-Aluminium-Oxid (NCA), ein Lithium-Eisen-Phosphat (LFP), ein Lithium-Nickel-Mangan-Cobalt-Oxid (NMC), Lithium-Titanat (LTO), Lithiummanganoxid (LMO) sowie einen Binder und ein Leitmittel auf.

Von der Batteriezelle 2 sind in der Figur beispielhaft lediglich die beiden Anoden 6 und die Kathode 8 dargestellt. In Zweckmäßiger Ausgestaltung umfasst die Batteriezelle jedoch eine Vielzahl an Anoden 6, die zweckmäßig ebenfalls beidseitig beschichtet sind, und eine Vielzahl an Kathoden 8, wobei die Anoden 6 und die Kathoden 8 in einer Stapelrichtung S alternierend angeordnet sind.

Zwischen den Anoden 6 und den Kathoden 8 ist jeweils ein fester Elektrolyt, also ein FeststoffElektrolyt 18 angeordnet. Dieser ist beispielsweise ein anorganischer Feststoffelektrolyt oder ein fester Polymerelektrolyt. Derartige Feststoff-Elektrolyte 18 sind aus dem Stand der Technik für Lithium-Festkörper-Batteriezellen bekannt.

Gemäß dem hier dargestellten Ausführungsbeispiel liegt der Feststoff-Elektrolyt 18 an der Anode 6 an.

Zwischen den Feststoff-Elektrolyten 18 und der Kathode 8 ist jeweils ein Separator 20 angeordnet. insbesondere liegt der Separator 20 an der Kathode 8 sowie am FeststoffElektrolyten 18 an, also sind der Separator 20 und die Kathode 8 bzw. der Separator und der Feststoff-Elektrolyten 18 mechanisch in Kontakt.

Der Separator 20 ist beispielhaft als ein unbeschichteter und poröser Kunststoff-Separator, der insbesondere als Polyolefin-Folie ausgebildet ist. Der Separator 20 weist bevorzugt eine Dicke d, also eine Ausdehnung in Stapelrichtung S auf, die größer als oder gleich 2 µm und/oder kleiner oder gleich 10 µm ist, insbesondere zwischen 3 µm und 5 µm beträgt.

Die Kathode 8 sowie der Separator 20 sind mit einem flüssigen Elektrolyt, also mit FlüssigElektrolyt 22 getränkt. Dieser umfasst zweckmäßig ein nichtwässriges Lösungsmittel sowie ein darin gelöstes Leitsalz.

Beispielsweise ist in der Beschichtung 12 der Anode 6 Feststoff-Elektrolyt 18 aufgenommen, mit anderen Worten ist die Beschichtung 12 mit Feststoff-Elektrolyt getränkt. Weiter beispielsweise und alternativ hierzu ist die Anode 6, insbesondere deren Beschichtung 12, mit dem FlüssigElektrolyt 22 getränkt.

Gemäß dem hier dargestellten Ausführungsbeispiel ist die Anode 6, insbesondere deren Beschichtung 12, dicht bezüglich des Flüssig-Elektrolyt 22 umfasst. Hierzu umfasst die Batteriezelle 2 eine für den Flüssig-Elektrolyt 22 undurchlässige, insbesondere eine nicht ionenleitfähige, Dichtung 24.

Die Dichtung 24 umfasst die Anode 6, insbesondere deren Beschichtung 12 rahmenartig. Die Dichtung 24 grenzt dabei den zwischen dem Feststoff-Elektrolyt 18 und dem Stromableiter 10 der Anode 6 gebildeten Raum, in welchem die Beschichtung 12 angeordnet ist, dicht gegen den Flüssig-Elektrolyt 22 ab. Zur besseren Erkennbarkeit der Beschichtung 12 und des Stromableiters 10 der Anode 6 sowie des Feststoff-Elektrolyt 18 ist in der Figur die Dichtung 24 lediglich abschnittsweise, nämlich in der Zeichenebene über und unter der jeweiligen Anode 6 bzw. dem jeweiligen Feststoff-Elektrolyt 18 dargestellt.

Anhand der Dichtung 24 ist ein direkter lonenaustausch zwischen der mit dem Flüssig-Elektrolyt 22 getränkten Kathode 8 mit der, beispielsweise ebenfalls mit Flüssig-Elektrolyt 22 getränkten, Anode 6 vermieden. Somit erfolgt die lonenleitung zwischen der Anode 6 und der Kathode 8 durch den Feststoff-Elektrolyt 18.

Gemäß einer nicht weiter dargestellten Alternative ist zusätzlich zur Anode 6 die Kathode 8 und/oder der Separator 20,in analoger Weise anhand der Dichtung 24 gegen den FlüssigElektrolyt 22 getrennt. Gemäß einer nicht weiter dargestellten Alternative ist lediglich die Kathode 8 und/oder der Separator 20, in analoger Weise anhand der Dichtung 24 gegen den Flüssig-Elektrolyt 22 getrennt.

Der Separator 20 dient als eine Art Pufferschicht zwischen der Kathode 8 und dem FeststoffElektrolyt 18. Der Separator ist gleicht eine (Oberflächen-) Rauigkeit der Beschichtung 6 und des Feststoff-Elektrolyt 18 aus, so dass eine mechanische und/oder eine elektrische Anbindung der Kathode 8 an den Feststoff-Elektrolyt 18 verbessert ist. Vorzugsweise ist der Separator 20 für eine besonders geeignete Pufferwirkung weicher, insbesondere flexibler oder leichter verformbar, als der Feststoff-Elektrolyt 18 und/oder als die am Separator 20 anliegende Elektrode.

Beispielsweise weist der Separator 20 eine Porosität auf, die größer oder gleich 40% und/oder kleiner oder gleich 90%, insbesondere kleiner oder gleich 80%, ist.

Gemäß einer nicht weiter dargestellten Alternative ist zusätzlich zum Separator 20 zwischen der Kathode und dem Feststoff-Elektrolyt 18 in analoger Weise hierzu zwischen der Anode 6 und dem Feststoff-Elektrolyt 18 ein weiterer Separator 20 angeordnet. Zweckmäßig sind die Anode 6 und dieser Separator 20 mit dem Flüssig-Elektrolyt 22 getränkt. In analoger Weise zu den oben dargestellten Ausführungen ist die Anode 6 und/oder die Kathode 8 anhand einer jeweiligen Dichtung 24 gegen den Flüssig-Elektrolyt 22 dicht umfasst.

Gemäß einer nicht weiter dargestellten Alternative ist der Separator 20 zwischen der Anode 6 und dem Feststoff-Elektrolyt 18 angeordnet. Zweckmäßig sind die Anode 6 und dieser Separator 20 mit dem Flüssig-Elektrolyt 22 getränkt. Es ist dann kein Separator 20 zwischen der Kathode 8 und dem Feststoff-Elektrolyt 18 vorhanden. Beispielweise ist dabei die Kathode 8 mit dem Flüssig-Elektrolyt 22 oder mit dem Feststoff-Elektrolyt 18 oder mit einem weiteren Feststoff-Elektrolyt getränkt. In analoger Weise zu den oben dargestellten Ausführungen ist die Anode 6 und/oder die Kathode 8 anhand einer jeweiligen Dichtung 24 gegen den FlüssigElektrolyt 22 dicht umfasst.

In nicht näher dargestellter Weise umfasst eine elektrisch angetriebenes Kraftfahrzeug eine Traktionsbatterie mit zumindest einer solchen Batteriezelle 2.

Die Erfindung ist nicht auf die vorstehend beschriebenen Ausführungsbeispiele beschränkt. Vielmehr können hieraus im Rahmen der Ansprüche auch andere Varianten der Erfindung vom Fachmann abgeleitet werden, ohne den Gegenstand der Erfindung zu verlassen. Insbesondere sind ferner alle im Zusammenhang mit den Ausführungsbeispielen und/oder in den Ansprüchen beschriebenen Einzelmerkmale auch auf andere Weise miteinander kombinierbar, ohne den Gegenstand der Erfindung zu verlassen.

### Bezugszeichenliste

- 2: Lithium-Ionen-Batteriezelle
- 4: Gehäuse
- 6: Anode
- 8: Kathode
- 10: Substrat der Anode
- 12: Beschichtung der Anode
- 14: Substrat der Kathode
- 16: Beschichtung der Kathode
- 18: Feststoff-Elektrolyt
- 20: Separator
- 22: Flüssig-Elektrolyt
- 24: Dichtung

- d: Dicke des Separators
- S: Stapelrichtung

## Patentansprüche

1. Lithium-Ionen-Batteriezelle (2), insbesondere für eine Traktionsbatterie eines elektrisch angetriebenes Kraftfahrzeugs, aufweisend
- eine Anode (6) und eine Kathode (8),
- einen zwischen der Anode (6) und der Kathode (8) angeordneten Feststoff-Elektrolyt (18),
- wobei die Anode (6) und/oder die Kathode (8) mit einem Flüssig-Elektrolyt (22) getränkt ist, und
- wobei zwischen der mit dem Flüssig-Elektrolyt (22) getränkten Anode (6) und dem Feststoff-Elektrolyt (18) und/oder zwischen der mit dem Flüssig-Elektrolyt (22) getränkten Kathode (8) und dem Feststoff-Elektrolyt (18) ein jeweiliger Separator (20) angeordnet ist.

2. Lithium-Ionen-Batteriezelle (2) nach Anspruch 1,
**dadurch gekennzeichnet,**
**dass** der Separator (20) eine Dicke (d) aufweist, die kleiner oder gleich 10 µm beträgt.

3. Lithium-Ionen-Batteriezelle (2) nach Anspruch 1 oder 2,
**dadurch gekennzeichnet,**
**dass** der Separator (20) weicher, insbesondere flexibler und/oder leichter verformbar, als der Feststoff-Elektrolyt (18) und/oder als die Anode (6) oder die Kathode (8) ist.

4. Lithium-Ionen-Batteriezelle nach einem der Ansprüche 1 bis 3,
**dadurch gekennzeichnet,**
**dass** der Separator (20) unbeschichtet ist.

5. Lithium-Ionen-Batteriezelle (2) nach einem der Ansprüche 1 bis 4,
**dadurch gekennzeichnet,**
**dass** der Separator (20) ein Kunststoff-Separator, insbesondere ein Polyolefin-Separator ist.

6. Lithium-Ionen-Batteriezelle (2) nach einem der Ansprüche 1 bis 5,
**dadurch gekennzeichnet,**
**dass** der Separator (20) dem Flüssig-Elektrolyt (22) getränkt ist.

7. Lithium-lonen-Batteriezelle (2) nach einem der Ansprüche 1 bis 6,
**gekennzeichnet durch**
dass die Anode (6) und/oder die Kathode (8), insbesondere deren Beschichtung (12, 16), gegen den Flüssig-Elektrolyt (22) dicht umfasst, insbesondere umschlossen, ist.

8. Traktionsbatterie für ein elektrisch angetriebenes Kraftfahrzeug, mit einer Lithium-Ionen-Batteriezelle (2) nach einem der Ansprüche 1 bis 7.

9. Elektrisch angetriebenes Kraftfahrzeug mit einer Traktionsbatterie nach Anspruch 8.
